# EUROPÄISCHE PATENTSCHRIFT

(11) **EP 2 080 151 B1**
(45) Veröffentlichungstag und Bekanntmachung des Hinweises auf die Patenterteilung: **17.04.2013**
(21) Anmeldenummer: 07816179.1
(22) Anmeldetag: 08.10.2007
(51) Int. Cl.: G06K 7/00, G07C 9/00

(54) **VORRICHTUNG UND VERFAHREN ZUM BETRIEB EINES SCHREIB-/LESEGERÄTS**
DEVICE AND METHOD FOR OPERATING A READ/WRITE DEVICE
DISPOSITIF ET PROCEDE POUR FAIRE FONCTIONNER UN APPAREIL D'ECRITURE/DE LECTURE

(30) Priorität: 09.10.2006 CH 16112006
(43) Veröffentlichungstag der Anmeldung: 22.07.2009
(73) Patentinhaber: Legic Identsystems AG, 8620 Wetzikon (CH)
(72) Erfinder: HAUSMANN, Peter, 8118 Pfaffhausen (CH); PLÜSS, Marcel, 8632 Tann (CH); PLÜSS, Peter, 8632 Tann (CH)
(74) Vertreter: Rentsch Partner AG
(86) Internationale Anmeldenummer: PCT/CH2007/000496
(87) Internationale Veröffentlichungsnummer: WO 2008/043192

(56) Entgegenhaltungen:
- EP-A- 0 877 331

## Beschreibung

Die vorliegende Erfindung fällt in das Gebiet der Kommunikation; sie betrifft eine Vorrichtung zum Betrieb eines Schreib/Lesegeräts, umfassend eine Antenne und eine Schreib/Leseeinheit, für eine Kommunikation mit einem Identifikationsmedium über eine Kommunikationsverbindung. Ferner betrifft die Erfindung ein Verfahren zum Betrieb dieser Vorrichtung.

Aus der W02004/105157A2 ist ein Verfahren und eine Vorrichtung für eine kontaktfreie Speisung eines Energiespeichergerätes mittels Hochfrequenz (HF) bekannt. Die Vorrichtung umfasst drei Einheiten: eine Basisstation, eine Empfangsstation mit einer Antenne und ein Energiespeichergerät, welches mit der Empfangsstation verbunden ist. Gemäss dem hier offenbarten Verfahren wird die Empfangsstation über die Basisstation kontaktfrei gespeist, die über die Antenne empfangene HF-Energie in eine DC-Spannung umgewandelt und das Energiespeichergerät geladen.

Die WO2006/077418A1 beschreibt ein erstes Geräte mit einer ersten Antenne und einer ersten Versorgung und ein zweites Gerät mit einer zweiten Antenne und einer zweiten Versorgung, wobei die Geräte untereinander mittels eines HF-Signals kontaktlos kommunizieren. Das erste oder zweite Gerät weist zusätzlich eine dritte Antenne für eine Kommunikation mit einem dritten Gerät auf. An die erste und/oder zweite Antenne ist eine erste und/oder zweite Energieentnahmekomponente zur Speisung der ersten und/oder zweiten Versorgung angeschlossen. Bei Kommunikation zwischen den beiden Geräten kann vereinbart werden, dass beispielsweise das einen tieferen Ladezustand der Versorgung aufweisende erste Gerät geladen wird, indem die erste Energieentnahmekomponente des ersten Gerätes über die erste Antenne die Energie aus dem vom zweiten Gerät ausgesandten HF-Signal entnimmt. Die Energieentnahme wir durch den Benutzer, im Anschluss an die Kommunikation zwischen den beiden Geräten oder zu Beginn der Kommunikation zwischen den beiden Geräten initiiert. Die Energieentnahme erfolgt wahlweise parallel oder sequentiell zur Kommunikation zwischen den beiden Geräten, indem beispielsweise verschiedene HF-Frequenzen für die Kommunikation bzw. die Energieübertragung verwendet werden. Die Energieentnahme durch das erste Gerät kann von einer Freigabe durch den Benutzer des zweiten Gerätes abhängig sein oder davon, dass das erste Gerät, allenfalls nach Anfrage an das zweite Geräte, ein nicht der Kommunikation dienendes, unmoduliertes HF-Signal des zweiten Gerätes empfängt.

Die EP 0 877 331 A2 beschreibt den nähsten Stand der Technik. Zwar geht aus dem Stand der Technik hervor, wie drahtlos miteinander verbundene Geräte, die in einem normalen Betriebszustand eine selbständige bzw. voneinander unabhängige Wechselwirkung mit Drittgeräten aufweisen, einander mit Energie versorgen können. Auf jeden Fall erfolgt bei einem teilweisen oder vollkommenem Ladungsverlust eines Akkumulators eines der verbundenen Geräte eine Aufladung seines Akkumulators, wobei auch eine teilweise oder vollständige Funktionalität des letzteren Geräts ermöglicht wird. Die externe Energieversorgung des zweiten Geräts greift somit immer auf die Versorgungseinheit des ersten Geräts zu, lädt diese auf und stellt darüber hinaus eine teilweise oder vollständige Funktionalität des zweiten Geräts her oder sicher.

Völlig unberücksichtigt bleibt hingegen, dass eine Versorgungseinheit eines Geräts nicht nur einen niedrigen oder unzureichenden Ladezustand aufweisen kann, kurz gesagt, Ladezustand: Akku leer, sondern darüber hinaus auch eine elektrische Fehlfunktion einer Versorgungseinheit vorliegen kann. Zu Beispiel kann die Versorgungseinheit unladbar sein oder einen Kurzschluss, einen elektrischen Leitungsunterbruch oder einen anderen elektrischen Fehler (Überspannung oder Verdrahtungsfehler bei direktem Netzanschluss) aufweisen. Auch in solchen Fällen lehrt das herkömmliche Fachwissen, einen Ladeversuch eines Geräts vorzunehmen, ohne die möglichen Folgen (Überhitzung, Brandschaden, Schädigung weiterer Bauelement) zu evaluieren oder zu berücksichtigen. Ungeachtet dieser Probleme beaufschlagt ein konventionelles Gerät ein in Wirkverbindungsnähe befindliches, nicht funktionsfähiges Gerät mit Ladeenergie zu versorgen und gegebenenfalls einen Betriebszustand zu ermöglichen.

Es ist deshalb Aufgabe der vorliegenden Erfindung hinsichtlich der Vorrichtung, diese dahingehend weiterzubilden, dass ein Gerät, unabhängig von seiner Energieversorgung für eine selbständige Wechselwirkung mit Drittgeräten, in einen Betriebszustand mit diesen Drittgeräten gesetzt wird.

Die der Erfindung für die Vorrichtung zugrunde liegende Aufgabe wird mit den Merkmalen des Anspruchs 1 gelöst. Vorteilhafte Ausgestaltungen der Erfindung für die Vorrichtung sind Gegenstand der Ansprüche 2 bis 10.

Der Kern der Erfindung ist in einer trennbaren Verbindung zwischen einer Schreib-/Lesegeräteversorgung und einem Schreib-/Lesegerät zu sehen, welche Verbindung bei einer kontaktfreien Wirkverbindung zwischen einer externen Speisung und dem Schreib-/Lesegerät offen ist; auch ohne die eigene Schreib-/Lesegeräteversorgung, ist das extern gespeiste Schreib-/Lesegerät nun mit einem Drittgerät, namentlich einem Identifikationsmedium betreibbar. Mit Vorteil ist gemäss dem vorliegenden Erfindungsgedanken ein Schreib-/Lesegerät nutzbar, dessen eigene Schreib-/Lesegeräteversorgung einen Defekt oder einen zu geringen Ladezustand aufweist, oder einfach -auch bei voller Funktionsfähigkeit dieser Schreib-/Lesegeräteversorgung- durch eine externe Speisung zumindest temporär ersetzt werden soll, bis die eigene Schreib-/Lesegeräteversorgung den Normalbetrieb wieder aufnimmt.

Herauszustellen ist, dass somit jederzeit und bei jedem Zustand einer zu einem Schreib-/Lesegerät gehörigen Schreib-/Lesegeräteversorgung eine Trennung beider voneinander erfolgen kann und zudem die Kontakte der Schreib-/Lesegeräteversorgung frei sind von jeder Verbindung zu dem Schreib-/Lesegerät. Es ist erfindungsgemäss erstmals möglich, eine Wartung/Reparatur der Schreib-/Lesegeräteversorgung vorzunehmen, die sich in einem kontaktfreien Zustand zum Schreib-/Lesegerät befindet.

Mittels der erfinderische Vorrichtung ist ein definierter Zustand einer Schreib-/Lesegeräteversorgung "von extern erzielbar", wobei das Schreib-/Lesegerät seinen Betrieb mit einem Identifikationsmedium beispielsweise uneingeschränkt vollziehen kann, ohne dass durch einen konventionell bekannten Ladevorgang, undefinierte bzw. unzulässige Schaltzustände und Ladezustände auftreten können.

Eine vorteilhafte Ausgestaltung der Erfindung sieht vor, dass eine zum Schreib-/Lesegerät gehörende Antenne die kontaktlose Wirkverbindung zur externen Speisung ermöglicht. Ohne den Erfindungsgedanken zu verlassen ist ebenfalls eine eigene Speiseantenne, eine Induktionsspule oder ein Mittel zur berührungsfreien kapazitiven Kopplung einsetzbar, die eine kontaktfreie Wirkverbindung mit der externen Speisung bereit stellen. Vorteilhaft an dieser Ausführung ist, dass eine solche Speiseantenne oder eine solche Induktionsspule lösbar mit dem Schreib-/Lesegerät verbunden sein kann und somit nur im Bedarfsfall zum Einsatz gelangt.

Mit Vorteil ist zwischen der Schreib/Lesegeräteversorgung und der Schreib-/Leseeinheit eine Schaltvorrichtung mit einer Schaltposition "Ein" und einer Schaltposition "Aus" angeordnet, wobei die Schreib/Lesegeräteversorgung bei Schaltposition "Aus" (12) verbindungsfrei ist und das Schreib/Lesegerät unabhängig von der eigenen Schreib-/Lesegeräteversorgung mittels externer Speisung in Betrieb genommen werden kann.

Weitere Vorteile der Erfindung ergeben sich aus weiteren, vom Anspruch 1 abhängigen Ansprüchen; diese erfahren ihre Würdigung in der nachfolgenden Beschreibung.

Es ist ferner Aufgabe der vorliegenden Erfindung hinsichtlich des Verfahrens, dieses derart weiterzubilden, dass ein Schreib-/Lesegerät, unabhängig von seiner zugehörigen Schreib-/Lesegeräteversorgung für eine selbständige Wechselwirkung mit Drittgeräten, in einen Betriebszustand mit diesen Drittgeräten gesetzt wird.

Die der Erfindung für das Verfahren zugrunde liegende Aufgabe wird mit den Merkmalen des Anspruchs 11 gelöst. Den Erfindungsgedanken weiterbildende Merkmale für das Verfahren sind Gegenstand der Ansprüche 12 bis 20.

Der Kern der Erfindung für das Verfahren liegt darin, dass eine Schreib-/Lesegeräteversorgung und ein Schreib-/Lesegerät voneinander getrennt werden, während eine externe Speisung kontaktfrei in Wirkverbindung mit dem Schreib-/Lesegerät steht, durch welche Speisung das Schreib-/Lesegerät zwecks Kommunikation mit einem Identifikationsmedium versorgt wird und diese Kommunikation unabhängig von der Schreib-/Lesegeräteversorgung erfolgt. Die Unabhängigkeit des Schreib-/Lesegeräts von der Schreib-/Lesegeräteversorgung ist dann bedeutungsvoll, wenn diese eingeschränkt funktionsfähig, temporär funktionslos und/oder funktionslos ist.

Mit Vorteil ist bei einer Ausgestaltung der Erfindung vorgesehen, dass die Trennung der Schreib-/Lesegeräteversorgung mittels einer Schaltvorrichtung durch die externe Speisung selbst geschaltet wird.

Sämtliche weiteren den Erfindungsgedanken ausgestaltenden Merkmale sind Gegenstand der abhängigen Ansprüche 12 bis 20, die in der nachfolgenden Beschreibung ihre Würdigung finden.

Im Folgenden wird die Erfindung anhand der Zeichnung beispielhaft erläutert, ohne den Erfindungsgedanken auf die gezeigten Ausführungsvarianten einzuschränken. Gleiche Bezugszeichen in den Figuren, bezeichnen gleiche Gegenstände. Es zeigen die:
- Fig. 1: ein Blockschaltbild einer erfindungsgemässen Vorrichtung zum Betrieb eines Schreib-/Lesegeräts;
- Fig. 2: ein weiteres Blockschaltbild der erfindungsgemässen Vorrichtung;
- Fig. 3: eine Schnittdarstellung einer Schliessvorrichtung mit der erfindungsgemässen Vorrichtung; und
- Fig. 4: ein weiteres Blockschaltbild der efindungsgemässen Vorrichtung mit einem Verbraucher.

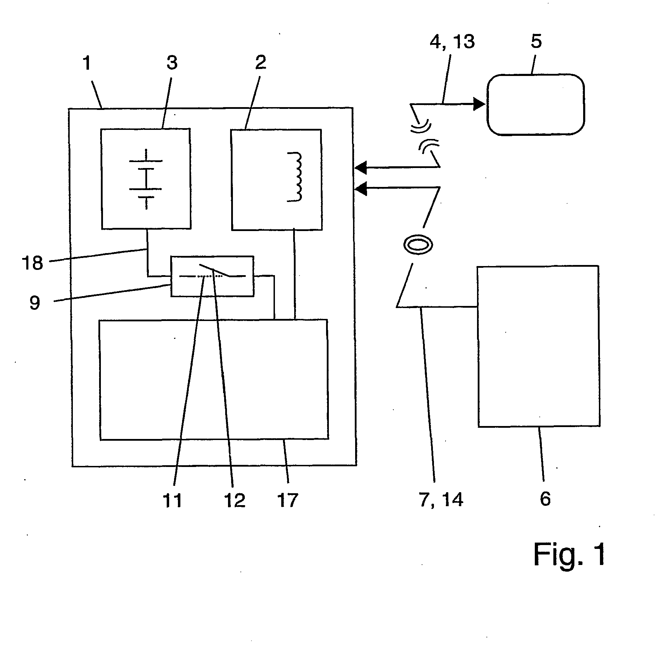

Fig. 1 zeigt ein Blockschaltbild einer erfindungsgemässen Vorrichtung zum Betrieb eines Schreib-/Lesegeräts 1, welches eine Schreib-/Leseeinheit 17, eine Antenne 2, eine Schreib-/Lesegerätversorgung 3, eine Verbindung 18 zwischen der Schreib-/Leseeinheit 17 und der Schreib-/Lesegeräteversorgung 3 und eine Schaltvorrichtung 9 mit einer Schaltposition "Ein" 11 und einer Schaltposition "Aus" 12 umfasst. Die Schaltvorrichtung 9 ist der Schreib-/Leseeinheit 17 und der Schreib-/Lesegeräteversorgung 3 zwischengeschaltet. Die Antenne 2 ist mit der Schreib-/Leseeinheit 17 verbunden.

Des Weiteren sind ein Identifikationsmedium 5 und eine externe Speisung 6 gezeigt. Das Identifikationsmedium 5 weist eine mögliche kontaktfreie Kommunikationsverbindung 4 zu dem Schreib-/Lesegerät 1 auf, welche mit einer Kommunikationsfrequenz f1, 13 betrieben wird. Die externe Speisung 6 zeigt eine kontaktfreie Wirkverbindung 7 bei einer Versorgungsfrequenz f2, 14.

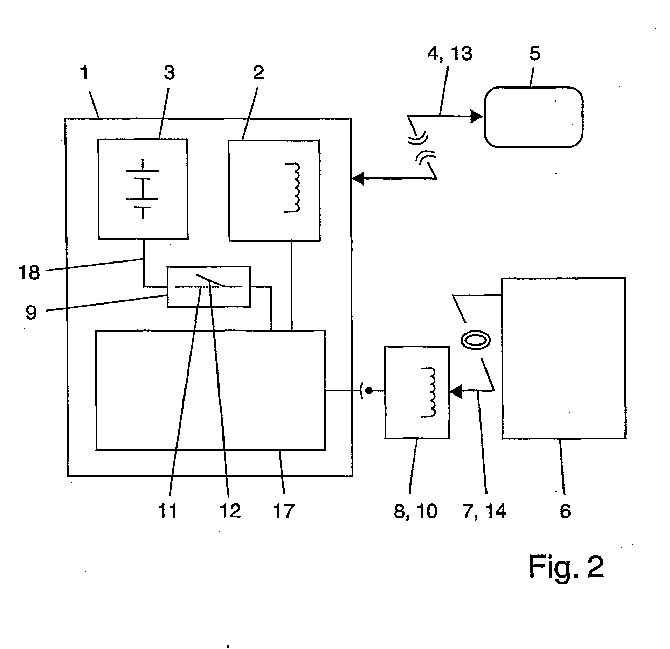

Fig. 2 zeigt ein Blockschaltbild einer alternativen Vorrichtung zum Betrieb eines Schreib-/Lesegeräts 1 gemäss der Erfindung, Diese Ausführungsvariante unterscheidet sich von der in Fig. 1 dargestellten durch eine lösbare Ankopplung einer weiteren Übertragereinheit 8, 10, namentlich eine Speiseantenne 8 oder eine Induktionsspule 10. Die kontaktfreie Wirkverbindung 7 der externen Speisung 6 erfolgt hier wahlweise über eine der beiden genannten Übertragereinheiten 8, 10.

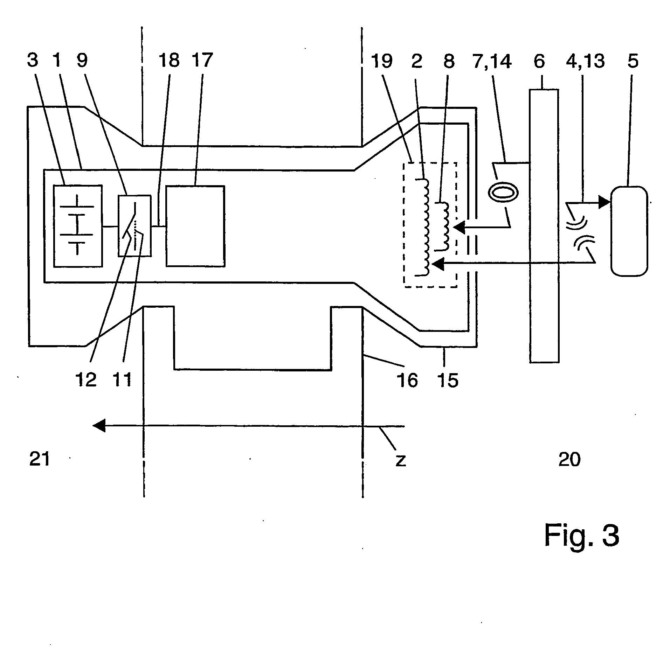

Fig. 3 zeigt eine Schnittdarstellung einer Schliessvorrichtung 15 einer öffenbaren Türe 16 mit einer Zutrittsrichtung Z. Die Schliessvorrichtung 15 umfasst ein Schreib-/Lesegerät 1 mit einer Schreib-/Leseeinheit 17, eine Antenne 2, eine Schreib-/Lesegerätversorgung 3, eine Speiseantenne 8 und einer Schaltvorrichtung 9 einer Verbindung 18 mit einer Schaltposition "Ein" 11 und einer Schaltposition "Aus" 12. Die Antenne 2 und die Speiseantenne 8 sind als einteilige, integrierte Antenneneinheit 19 ausgebildet. Des Weiteren sind ein Identifikationsmedium 5, eine kontaktfreie Kommunikationsverbindung 4 mit einer Kommunikationsfrequenz f1, 13, eine externe Speisung 6 und eine kontaktfreie Wirkverbindung 7 mit einer Versorgungsfrequenz f2, 14 gezeigt.

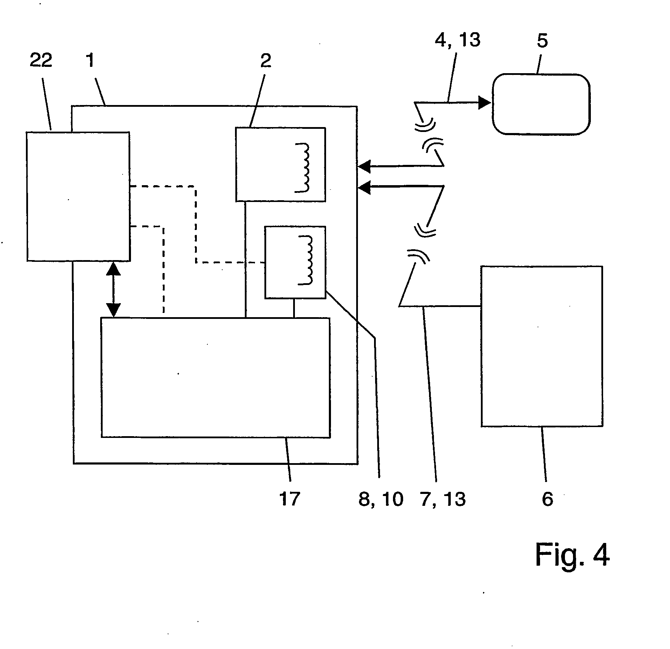

Fig. 4 zeigt ein Blockschaltbild einer weiterer Ausführungsvariante der erfindungsgemässen Vorrichtung zum Betrieb eines Schreib-/Lesegeräts 1. Das Schreib-/Lesergerät 1 weist eine Antenne 2 und eine Speiseantenne 8 auf. Die Kommunikationsverbindung 4 und die kontaktfreie Wirkverbindung 7 erfolgen bei der gleichen Frequenz f1, 13. Das Schreib-/Lesegerät 1 weist einen Verbraucher 22 auf, welcher in einem Notbetrieb zur Versorgung entweder direkt mit der Speiseantenne 8 oder mit der Schreib-/Leseeinheit 17 verbunden ist (jeweilige gestrichelte Linie). Zwischen dem Verbraucher 22 und der Schreib-/Leseeinheit 17 besteht eine logische Verbindung zur Steuerung des Verbrauches 22 und/oder zur Kommunikation zwischen dem Verbraucher 22 und der Schreib-/Leseeinheit 17 (durchzogene Linie mit Pfeilen an beiden Enden). Zur Vereinfachung ist in der Fig. 4 die Schreib-/Lesegeräteversorgung 3 und die trennbare Verbindung 18 nicht gezeigt.

In den Fig. 1 bis 4 ist gezeigt, dass im ordnungsgemässen Funktionszustand das Schreib-/Lesegerät 1 mittels der Schreib-/Leseeinheit 17 über die Kommunikationsverbindung 4 mit dem Identifikationsmedium 5 kommuniziert, wenn sich dieses in der Nähe der Antenne 2 des Schreib-/Lesegeräts 5 befindet. Die Kommunikation erfolgt bei einer Kommunikationsfrequenz f1, 13, vorzugsweise im Bereich grösser 10 MHz, insbesondere bei der Standard-Frequenz von 13.56 MHz. Ein Identifikationsmedium 5 ohne autonome Versorgung (passives Identifikationsmedium) bezieht hierbei die Energie für die Kommunikation aus der bzw. über die Kommunikationsverbindung 4 von dem Schreib-/Lesegerät 1 (aktives Schreib-/Lesegerät).

Bei einer unzureichenden Speisung des Schreib-/Lesegeräts 1 durch die Schreib-/Lesegeräteversorgung 3 geht das Schreib-/Lesegerät 1 bzw. die Schreib-/Leseeinheit 17 in einen funktionslosen Zustand über. Ein funktionsloser Zustand entsteht beispielsweise durch einem Ausfall der Netzversorgung, einem Abfall einer Akku- bzw. Batteriespannung unter einen für den Betrieb des Schreib-/Lesegeräts 1 notwendigen Energiezustand. Im funktionslosen Zustand kann das Schreib-/Lesegerät 1 nicht mehr mit dem Identifikationsmedium 5 kommunizieren.

Eine externe Speisung 6, welche in eine unidirektionale, kontaktfreie Wirkverbindung 7 mit dem Schreib-/Lesegerät 1 gebracht wird, führt das Schreib-/Lesegerät 1 vom funktionslosen Zustand in einen temporären Funktionszustand (Notbetrieb) über. Die externe Speisung 6 speist das Schreib-/Lesergerät, indem das Schreib-/Lesegerät 1 bzw. die Schreib-/Leseeinheit 17 die für die Aufrechterhaltung des Betriebszustands benötigte Energie über die Antenne 2 der kontaktfreien Wirkverbindung 7 entnimmt, wie in Fig. 1 gezeigt. Die Speisung des Schreib-/Lesegeräts 1 erfolgt ohne Kommunikation zwischen dem Schreib-/Lesegerät 1 und der externen Speisung 6 direkt und unmittelbar, sobald und/oder solange die unidirektionale, kontaktfreie Wirkverbindung 7 am Schreib-/Lesegerät 1 anliegt. Im Notbetrieb, d.h. solange die kontaktfreie Wirkverbindung 7 mit der externen Speisung 6 besteht, kann das Schreib-/Lesegerät 1 mit dem Identifikationsmedium 5 kommunizieren. Bezüglich der Kommunikation bzw. der Kommunikationsverbindung 4 gibt es für das Identifikationsmedium 5, auch als passives Identifikationsmedium, keinen Unterschied zwischen dem ordnungsgemässen Funktionszustand und dem temporären Notbetrieb.

Im Notbetrieb wird die Schreib-/Lesegeräteversorgung 3 mittels einer Schaltvorrichtung 9 von der Schreib-/Leseeinheit 17 getrennt. Bei kontaktfreier Wirkverbindung 7 zwischen der externen Speisung 6 und dem Schreib-/Lesegerät 1 wird die Schaltvorrichtung 9 auf Schaltposition "Aus" 12 geschaltet, damit durch die externe Speisung 6 nicht die Schreib-/Lesergeräteversorgung 3 anstelle der Schreib-/Leseeinheit 17 gespeist wird, sondern die kontaktfrei zugeführte Energie aus der externen Speisung 6 vollumfänglich für den Notbetrieb des Schreib-/Lesegeräts 3 genutzt wird. Im Gegensatz zu den herkömmlichen Vorrichtungen zur externen Speisung von Schreib-/Lesegeräten, bei denen die extern zugeführte Energie hauptsächlich als Ladeenergie einer zugehörigen Schreib-/Lesegeräteversorgung bereitgestellt wird, bedarf es bei der erfindungsgemässen Vorrichtung einer massgeblich kleineren, zugeführten Energieeinheit für den ausschliesslichen, oben beschriebenen Notbetrieb. Darüber hinaus kann die erfindungsgemässe Vorrichtung auch dann betrieben werden, wenn eine Schreib-/Lesegeräteversorgung 3 einen signifikanten elektrischen Fehler aufweist, wie beispielsweise einen Kurzschluss. Anders als bei konventionellen Vorrichtungen besteht bei der neuen Vorrichtung nicht die Gefahr, in einen Kurzschluss hineinzuspeisen, was zu grösseren Ausfällen führen kann.

Sobald die kontaktfreie Wirkverbindung 7 getrennt wird, schaltet die Schaltvorrichtung 9 vom Schaltzustand "Aus" 12 in den Einzustand "Ein" 11 und die Verbindung 18 zwischen der Schreib-/Leseeinheit 17 und der Schreib-/Leseversorgung 3 wird wieder hergestellt.

Die trennbare Verbindung 18 zwischen der Schreib-/Leseeinheit 17 und der Schreib-/Leseversorgung 3 kann beispielsweise durch einen MOSFET in Kombination mit einer Diode realisiert werden.

Die trennbare Verbindung 18 zwischen der Schreib-/Lesegeräteversorgung 3 und der Schreib-/Leseeinheit 17 verbleibt im funktionslosen Zustand des Schreib-/Lesegeräts 1 im geschlossenen Zustand, d.h. die Verbindung 18 wird nicht geöffnet. Mit dem Vorhandensein der kontaktfreien Wirkverbindung 7 und der externen Speisung 6 wird das Schreib-/Lesegerät 1 bzw. die Schreib-/Leseeinheit 17 in einen Betriebszustand versetzt und hierbei die trennbare Verbindung 18 geöffnet. Der Schaltvorgang der trennbaren Verbindung 18 wird sozusagen durch das Vorhandensein der kontaktfreien Wirkverbindung 7 mit der externen Speisung 6 ausgelöst bzw. getriggert.

In den Fig. 2 und Fig. 3 erfolgt die externe Wirkverbindung 7 über eine zusätzliche, *von der* der Kommunikationsverbindung 4 zugeordneten Antenne 2 unabhängige Übertragereinheit, beispielsweise eine Speiseantenne 8 oder eine Induktionsspule 10. Die Übertragereinheit ist in Fig. 2 lösbar und wird mit dem Schreib-/Lesegerät 1 verbunden, bevor das Schreib-/Lesegerät 1 mit der externen Speisung 6 gespeist wird.

In Fig. 3 bilden die Antenne 2 und die Speiseantenne 8 die Antenneneinheit 19. Die Antenneneinheit 19 ist als einteilige -hier nicht näher gezeigte- Leiterplatte mit separaten Windungen und Abgriffen bzw. Anschlüssen der Antenne 2 und der Speiseantenne 8 ausgebildet Die Antenne 2 liegt beispielsweise innerhalb der Speiseantenne 8 (grösster Durchmesser der äussersten Windung der Antenne 2 kleiner als der kleinste Durchmesser der innersten Windung der Speiseantenne 8) oder umgekehrt.

Die kontaktfreie Wirkverbindung 7 erfolgt bei einer Versorgungsfrequenz f2, 14. Die Versorgungsfrequenz f2, 14 kann exakt und ungefähr der Kommunikationsfrequenz f1, 13 entsprechen oder von dieser abweichen. Bei einer Versorgungsfrequenz f2, 14 grösser 20 MHz ist diese vorzugsweise ein Vielfaches der Kommunikationsfrequenz f1, 13, beispielsweise 27.12 MHz oder 40.68 MHz. Bei einer Versorgungsfrequenz f2, 14 kleiner 10 MHz ist die Kommunikationsfrequenz f1, 13 vorzugsweise ein Vielfaches der Versorgungsfrequenz f2 ,14, von beispielsweise 6.78 MHz.

Die Wahl verschiedener Frequenzen für die Kommunikation und die Versorgung erleichtert die Kommunikationsverbindung 4 des Schreib-/Lesegeräts 1 mit dem Identifikationsmedium 5 bei gleichzeitiger kontaktfreier Wirkverbindung 7 bzw. Speisung des Schreib-/Lesegeräts 1 durch die externe Speisung 6.

Die externe Speisung 6 umfasst in einem einfachsten Aufbau als portables Handgerät -hier nicht dargestellt- eine dritte Antenne zur kontaktfreien Wirkverbindung mit der Antenne 2 oder Speiseantenne 8 des Schreib-/Lesegeräts 1 oder eine zweite Induktionsspule zur Wirkverbindung mit der Induktionsspule 10, eine Handgeräteversorgung und Bedienungselemente.

Im Notbetrieb wird beispielsweise die kontaktlose Wirkverbindung 7 mit der Versorgungsfrequenz f2, 14 mittels Dioden zu einer DC-ähnlichen Spannung gerichtet und derart reduziert wird, dass mit dieser direkt die Schreib-/Leseeinheit 17 gespeist und das Schreib-/Lesegerät 1 betrieben wird. Diese Gleichrichtung und Reduktion kann auch in einer separaten, der Schreib-/Leseeinheit 17 vorgeschalteten Schaltung erfolgen.

Die Fig. 4 zeigt die Versorgung und den Betrieb des Verbrauchers 22 im Notbetrieb bei der kontaktfreien Wirkverbindung 7 des Schreib-/Lesegeräts 1 mit der externen Speisung 6. Die Versorgung von mehreren Verbrauchern ist ebenfalls möglich. Die Versorgung erfolgt hierbei entweder direkt über die Versorgungsantenne 8 oder indirekt über die Schreib-/Leseeinheit 17. Der Betrieb des Verbrauchers 22 wird durch die logische Verbindung zwischen der Schreib-/Leseeinheit 17 und dem Versorger 22 gesteuert. Die Versorgung des Verbrauchers 22 erfolgt beispielsweise nur unter der Voraussetzung, dass über die externe Speisung 6 die vorrangige Versorgung des Schreib-/Leseeinheit 17 sichergestellt ist, d.h. wenn genügend Energie für die Versorgung und/oder den Betrieb sowohl der Schreib-/Leseeinheit 17 wie des Verbrauchers 22 zur Verfügung steht. Es ist aber auch möglich, dass der Verbraucher 22 direkt versorgt und direkt -nicht durch die Schreib-/Leseeinheit 17 gesteuert- betrieben wird. Ein solches Betriebsbeispiel wäre ein Notbetrieb des Verbrauchers 22 im Fehlerfall der Schreib-/Lesegeräteversörgung 3 in Form einer Entriegelung einer elektrisch angetriebenen Schliessvorrichtung.

Verbraucher 22 sind insbesondere im Schreib-/Lesegerät 1 angeordnete oder von diesem abgesetzte Peripheriegeräte wie:
- ein Motor, welcher vom Schreib-/Lesegerät 1 zum Öffnen oder Schliessen eines Bolzens eines Türschlosses betrieben, d.h. angesteuert und gespeist wird;
- eine Eingabevorrichtung, beispielsweise eine Folientastatur zur Eingabe von Daten wie einem Berechtigungscode;
- eine optische Anzeigevorrichtung, beispielsweise ein LED- oder LCD-Panel;
- eine akustische Anzeigevorrichtung, beispielsweise ein Piepser als akustischer Signalgeber.

Auch die Schreib-/Lesegeräteversorgung 3 selber kann als Verbraucher 22 wirken, beispielsweise wenn diese beim Vorliegen einer Wirkverbindung 7 mit der externen Speisung 6 aufgeladen wird.

Anhand der Fig. 3 wird beispielhaft eine Anwendung der erfindungsgemässen Vorrichtung und des erfindungsgemässen Verfahrens gezeigt. Die Schliessvorrichtung 15 einer Türe 16, weist eine mediengebundene Zutrittsrichtung Z von einem Aussenbereich 20 in einen Innenbereich 21 auf. Ein Zutritt in den Innenbereich 21 ist nur nach erfolgreicher Kommunikation mit einem zum Zutritt berechtigenden Identifikationsmedium 5 möglich, während ein Austritt in den Aussenbereich 20 jederzeit ohne Identifikationsmedium 5 erfolgen kann. Die Schliessvorrichtung 15 ist weiter nicht mit einer versorgungsfreien Schliessvorrichtungseinheit für eine mechanische Wechselwirkung mit einem Zutrittsmedium ausgestattet, beispielsweise einem mechanischen Schloss und einem zugehörigen Schlüssel. Wenn die Schliessvorrichtung 15 bzw. des Schreib-/Lesergeräts 1 nicht mehr funktioniert (funktionsloser Zustand), weil beispielsweise eine als Schreib-/Leseversorgung 3 ausgebildete Batterie leer ist, welche nur nach Zutritt in den Innenbereich 21, d.h. von innen her, ausgewechselt werden kann, ist ein Ersetzen der Batterie ohne Beschädigung der Türe 16 nicht mehr möglich. Die externe Speisung 6 ermöglicht mittels der kontaktlosen Wirkverbindung 7 über die Speiseantenne 8, bei getrennter Verbindung 18 zwischen der Schreib-/Lesegeräteeinheit 17 und der Schreib-/Lesegeräteversorgung 3, den temporären Notbetrieb der Schreib-/Leseeinheit 17 bzw. des Schreib-/Lesegeräts 1 und den Zutritt. Im temporären Notbetrieb erfolgt mindestens eine einmalige Kommunikation des Schreib-/Lesegeräts 1 mit dem Identifikationsmedium 5, die Schliessvorrichtung 15 gibt die Türe 16 frei und der Zutritt in den Innenbereich 21 zum Ersetzen der als Schreib-/Leseversorgung 3 ausgebildete Batterie ist möglich. Nach dem Ersetzen der Batterie ist der funktionslose Zustand des Schreib-/Lesegeräts 1 bzw. der Schreib-/Lesergeräteversorgung 3 behoben und die externe Speisung 6 wird nicht mehr benötigt. Mit dem Entfernen der externen Speisung 6 von dem Schreib-/Lesegerät 1 wird die Verbindung 18 zwischen dem Schreib-/Lesegerät 1 und der Schreib-/Lesegeräteversorgung 3 wieder hergestellt und das Schreib-/Lesegerät 1 von der Schreib-/Lesegeräteversorgung 3 gespeist (ordnungsgemässen Funktionszustand). Mit der erfindungsgemässen Vorrichtung und dem erfindungsgemässen Verfahren erübrigt sich, dass jede einzelnen Schliessvorrichtung 15 mit einer versorgungsfreien Schliessvorrichtungseinheit, einer Notspeisungsversorgung oder einem Anschluss an einen alternative, permanente Versorgung wie z.B. einem Notstromnetz angeschlossen werden muss. Dadurch ergeben sich wirtschaftliche Kostenvorteile durch eine einfachere Konstruktion und eine vereinfachte Installation und Wartung der Schliessvorrichtungen 15. Weil weiter Anschlüsse der Schliessvorrichtung 15 im Aussenbereich 20, welche einen potentiellen Angriffspunkt und ein Sicherheitsrisiko darstellen, fehlen, wird die Sicherheit erhöht. Solche Anschlüsse sind beispielsweise eine Öffnung einer zusätzlichen versorgungsfreien Schliessvorrichtungseinheit (Schlüsselloch) und/oder die Kontaktstellen der lösbaren, innerhalb der Schliessvorrichtung 15 angeordnet Speiseantenne 8.

Ein weiteres Anwendungsbeispiel ist anhand eines Schreib-/Lesegeräts 1 gezeigt, bei welchem die Schreib-/Lesegeräteversorgung 3 durch eine externe Netzversorgung und eine Notstromversorgung erfolgt. Die erfindungsgemässe Vorrichtung und das erfindungsgemässe Verfahren ermöglichen Rettungskräften den Betrieb des Schreib-/Lesegeräts 1 bei einem gleichzeitigen Ausfall der externen Netzversorgung und der Notstromversorgung, wie er beispielsweise bei einem Gebäudebrand auftreten kann.

Als weitere Ausführungsvarianten ist die Antenne 2 und/oder die Schreib-/Lesegeräteversorgung 3 lösbar oder unlösbar ausserhalb des Schreib-/Lesegeräis 1 angeordnet oder von dem Schreib-/Lesegerät 1 abgesetzt; ist die Übertragungseinheit 8, 10 innerhalb des Schreib-/Lesegeräts 1 angeordnet; ist die als Batterie dargestellte Schreib-/Lesegeräteversorgung 3 als ein Akkumulator oder eine Netzversorgung realisiert.

Die erfindungsgemässe Vorrichtung und das erfindungsgemässe Verfahren eignen sich weiter auch zum Betrieb eines Schreib/Lesegeräts 1 mit einer kontaktbehafteten Kommunikationsverbindung 4 mit einem Identifikationsmedium 5.

### Bezugszeichenliste

| | |
|---|---|
| 1 | Schreib-/Lesegeräts |
| 2 | Antenne |
| 3 | Schreib-/Lesegräteversorgung |
| 4 | Kommunikationsverbindung |
| 5 | Identifikationsmedium |
| 6 | externe Speisung |
| 7 | kontaktfreie Wirkverbindung |
| 8 | Speiseantenne |
| 9 | Schaltvorrichtung |
| 10 | Induktionsspule |
| 11 | Schaltposition "Ein" |
| 12 | Schaltposition "Aus" |
| 13 | Kommunikationsfrequenz f1 |
| 14 | Versorgungsfrequenz f2 |
| 15 | Schliessvorrichtung |
| 16 | Türe |
| 17 | Schreib-/Leseeinheit |
| 18 | Verbindung |
| 19 | Antenneneinheit |
| 20 | Aussenbereich |
| 21 | Innenbereich |
| 22 | Verbraucher |
| Z | Zutrittsrichtung |

## Patentansprüche

1. Vorrichtung zum Betrieb eines Schreib-/Lesegeräts (1), umfassend eine Antenne (2) und eine Schreib-/Leseeinheit (17), für eine Kommunikation mit einem Identifikationsmedium (5) über eine Kommunikationsverbindung (4), **dadurch gekennzeichnet, dass** eine Schaltvorrichtung (9) zum Trennen oder Schliessen einer Verbindung (18) zwischen einer Schreib-/Lesegeräteversorgung (3) und dem Schreib-/Lesegerät (1) vorgesehen ist, und dass die Schaltvorrichtung (9) eingerichtet ist bei einer kontaktfreien Wirkverbindung (7) zwischen einer externen Speisung (6) und dem Schreib-/Lesegerät (1) die Verbindung (18) zwischen der Schreib-/Lesegeräteversorgung (3) und dem Schreib-/Lesegerät (1) zu Trennen, so dass das Schreib-/Lesegerät (1) für die Kommunikation mit dem Identifikationsmedium (5) unabhängig von der Schreib-/Lesegeräteversorgung (3) durch die externe Speisung (6) versorgt wird.

2. Vorrichtung nach Anspruch 1, **dadurch gekennzeichnet, dass** die kontaktfreie Wirkverbindung (7) zwischen der Antenne (2) und der externen Speisung (6) besteht.

3. Vorrichtung nach Anspruch 1, **dadurch gekennzeichnet, dass** das Schreib-/Lesegerät (1) eine Speiseantenne (8) und/oder eine Induktionsspule (10) umfasst, die die kontaktfreie Wirkverbindung (7) mit der externen Speisung (6) ermöglicht.

4. Vorrichtung nach einem der Ansprüche 1 bis 3, **dadurch gekennzeichnet, dass** die Kommunikationsverbindung (4) mit dem Identifikationsmedium (5) bei einer Kommunikationsfrequenz f1 (13) und die kontaktfreie Wirkverbindung (7) bei einer Versorgungsfrequenz f2 (14) besteht.

5. Vorrichtung nach Anspruch 4, **dadurch gekennzeichnet, dass** die Versorgungsfrequenz f2 (14) ein ganzzahliges Vielfaches der Kommunikationsfrequenz f1 (13) ist.

6. Vorrichtung nach Anspruch 4, **dadurch gekennzeichnet, dass** die Kommunikationsfrequenz f1 (13) ein ganzzahliges Vielfaches der Versorgungsfrequenz f2 (14) ist.

7. Vorrichtung nach einem der Ansprüche 1 bis 6, **dadurch gekennzeichnet, dass** durch die externe Speisung (6) ein Verbraucher (22) des Schreib-/Lesegeräts (1) betreibbar ist.

8. Vorrichtung nach einem der Ansprüche 1 bis 7, **dadurch gekennzeichnet, dass** die Schreib-/Lesegeräteversorgung (3) mindestens eines der folgenden Versorgungsmittel umfasst, nämlich einen Akkumulator, eine Batterie oder eine Netzversorgung.

9. Verfahren zum Betrieb eines Schreib-/Lesegeräts (1), welches eine Antenne (2) und eine Schreib-/Lesegeräteeinheit (17) für eine Kommunikation mit einem Identifikationsmedium (5) über eine Kommunikationsverbindung (4) umfasst, **dadurch gekennzeichnet, dass** bei einer kontaktfreien Wirkverbindung (7) zwischen einer externen Speisung (6) und dem Schreib-/Lesegerät (1) eine Verbindung (18) zwischen einer Schreib-/Lesegeräteversorgung (3) und dem Schreib-/Lesegerät (1) durch eine Schaltvorrichtung (9) getrennt wird, so dass das Schreib-/Lesegerät (1) für die Kommunikation mit dem Identifikationsmedium (5) unabhängig von der Schreib-/Lesegeräteversorgung (3) durch die externe Speisung (6) versorgt wird.

10. Verfahren nach Anspruch 9, **dadurch gekennzeichnet, dass** die Antenne (2) und die externe Speisung (6) miteinander kontaktfrei wirkverbunden werden.

11. Verfahren nach Anspruch 9, **dadurch gekennzeichnet, dass** die externe Speisung (6) über eine Speiseantenne (8) und/oder eine Induktionsspule (10) kontaktfrei wirkverbunden wird.

12. Verfahren nach einem der Ansprüche 9 bis 11, **dadurch gekennzeichnet, dass** die Kommunikationsverbindung (4) mit dem Identifikationsmedium (5) bei einer Kommunikationsfrequenz f1 (13) und die kontaktfreie Wirkverbindung (7) bei einer Versorgungsfrequenz f2 (14) erfolgt

13. Verfahren nach Anspruch 12, **dadurch gekennzeichnet, dass** die Versorgungsfrequenz f2 (14) als ganzzahliges Vielfaches der Kommunikationsfrequenz f1 (13) gewählt wird.

14. Verfahren nach Anspruch 12, **dadurch gekennzeichnet, dass** die Kommunikationsfrequenz f1 (13) ein ganzzahliges Vielfaches der Versorgungsfrequenz f2 (14) ist.

15. Verfahren nach einem der Ansprüche 9 bis 14, **dadurch gekennzeichnet, dass** durch die externe Speisung ein Verbraucher (22) des Schreib-/Lesegeräts (1) betrieben wird.

## Claims

1. Apparatus for operating a read/writer (1), comprising an antenna (2) and a read/write unit (17), for communication with an identification medium (5) via a communication link (4), **characterized in that** a switching apparatus (9) for making or breaking a connection (18) between a read/writer supply (3) and the read/writer (1) is provided, and **in that** the switching apparatus (9) is set up to break the connection (18) between the read/writer supply (3) and the read/writer (1) when there is a contactless operative connection (7) between an external power supply (6) and the read/writer (1), with the result that the read/writer (1) is supplied by the external power supply (6) independently of the read/writer supply (3) for the purpose of the communication with the identification medium (5).

2. Apparatus according to Claim 1, **characterized in that** the contactless operative connection (7) exists between the antenna (2) and the external power supply (6).

3. Apparatus according to Claim 1, **characterized in that** the read/writer (1) comprises a feed antenna (8) and/or an induction coil (10) which makes the contactless operative connection (7) to the external power supply (6) possible.

4. Apparatus according to one of Claims 1 to 3, **characterized in that** the communication link (4) to the identification medium (5) exists at a communication frequency f1 (13) and the contactless operative connection (7) exists at a supply frequency f2 (14).

5. Apparatus according to Claim 4, **characterized in that** the supply frequency f2 (14) is an integer multiple of the communication frequency f1 (13).

6. Apparatus according to Claim 4, **characterized in that** the communication frequency f1 (13) is an integer multiple of the supply frequency f2 (14).

7. Apparatus according to one of Claims 1 to 6, **characterized in that** the external power supply (6) can operate a load (22) of the read/writer (1).

8. Apparatus according to one of Claims 1 to 7, **characterized in that** the read/writer supply (3) comprises at least one of the following supply means, namely a storage battery, a battery or a mains supply.

9. Method for operating a read/writer (1), which comprises an antenna (2) and a read/write unit (17), for communication with an identification medium (5) via a communication link (4), **characterized in that** a connection (18) between a read/writer supply (3) and the read/writer (1) is broken by a switching apparatus (9) when there is a contactless operative connection (7) between an external power supply (6) and the read/writer (1), with the result that the read/writer (1) is supplied by the external power supply (6) independently of the read/writer supply (3) for the purpose of the communication with the identification medium (5).

10. Method according to Claim 9, **characterized in that** the antenna (2) and the external power supply (6) are operatively connected to one another contactlessly.

11. Method according to Claim 9, **characterized in that** the external power supply (6) is operatively connected contactlessly by means of a feed antenna (8) and/or an induction coil (10).

12. Method according to one of Claims 9 to 11, **characterized in that** the communication link (4) to the identification medium (5) is made at a communication frequency f1 (13) and the contactless operative connection (7) is made at a supply frequency f2 (14).

13. Method according to Claim 12, **characterized in that** the supply frequency f2 (14) chosen is an integer multiple of the communication frequency f1 (13).

14. Method according to Claim 12, **characterized in that** the communication frequency f1 (13) is an integer multiple of the supply frequency f2 (14).

15. Method according to one of Claims 9 to 14, **characterized in that** the external power supply operates a load (22) of the read/writer (1).

## Revendications

1. Procédé de mise en fonctionnement d'un appareil d'écriture/lecture (1), comprenant une antenne (2) et une unité d'écriture/lecture (17), destiné à communiquer avec un support d'identification (5) par l'intermédiaire d'une liaison de communication (4), **caractérisé en ce qu'**il est prévu un dispositif de commutation (9) destiné à déconnecter ou connecter une liaison (18) entre une alimentation d'appareil d'écriture/lecture (3) et l'appareil de lecture/lecture (1), et **en ce que** le dispositif de commutation (9) est conçu pour déconnecter la liaison (18) entre l'alimentation d'appareil d'écriture/lecture (3) et l'appareil d'écriture/lecture (1) lors d'une liaison fonctionnelle sans contact (7) entre une alimentation externe (6) et l'appareil d'écriture/lecture (1) de manière à ce que l'appareil d'écriture/lecture (1) soit alimenté pour la communication avec le support d'identification (5) indépendamment de l'alimentation d'appareil d'écriture/lecture (3) par l'alimentation externe (6).

2. Dispositif selon la revendication 1, **caractérisé en ce que** la liaison fonctionnelle sans contact (7) entre l'antenne (2) et l'alimentation externe (6) est établie.

3. Dispositif selon la revendication 1, **caractérisé en ce que** l'appareil d'écriture/lecture (1) comprend une antenne d'alimentation (8) et/ou une bobine d'induction (10) qui permet d'établir la liaison fonctionnelle sans contact (7) avec l'alimentation externe (6).

4. Dispositif selon l'une quelconque des revendications 1 à 3, **caractérisé en ce que** la liaison de communication (4) est établie avec le support d'identification (5) à une fréquence de communication f1 (13) et **en ce que** la liaison fonctionnelle sans contact (7) est établie à une fréquence d'alimentation f2 (14).

5. Dispositif selon la revendication 4, **caractérisé en ce que** la fréquence d'alimentation f2 (14) est un multiple entier de la fréquence de communication f1 (13).

6. Dispositif selon la revendication 4, **caractérisé en ce que** la fréquence de communication f1 (13) est un multiple entier de la fréquence d'alimentation f2 (14).

7. Dispositif selon l'une quelconque des revendications 1 à 6, **caractérisé en ce qu'**une charge (22) de l'appareil d'écriture/lecture (1) peut être mise en fonctionnement par l'intermédiaire de l'alimentation externe (6).

8. Dispositif selon l'une quelconque des revendications 1 à 7, **caractérisé en ce que** l'alimentation d'appareil d'écriture/lecture (3) comprend au moins l'un des moyens d'alimentation suivants, à savoir un accumulateur, une batterie ou une alimentation secteur.

9. Procédé de mise en fonctionnement d'un appareil d'écriture/lecture (1) qui comprend une antenne (2) et une unité d'appareil d'écriture/lecture (17), destiné à communiquer avec un support d'identification (5) par l'intermédiaire d'une liaison de communication (4), **caractérisé en ce que** lors d'une liaison fonctionnelle sans contact (7) entre une alimentation externe (6) et l'appareil d'écriture/lecture (1), une liaison (18) entre une alimentation d'appareil d'écriture/lecture (3) et l'appareil d'écriture/lecture (1) est déconnectée par un dispositif de commutation (9) de manière à ce que l'appareil d'écriture/lecture (1) soit alimenté par l'alimentation externe (6) pour communiquer avec le support d'identification (5) indépendamment de l'alimentation d'appareil d'écriture/lecture (3).

10. Procédé selon la revendication 6, **caractérisé en ce que** l'antenne (2) et l'alimentation externe (6) sont fonctionnellement reliées l'une à l'autre sans contact.

11. Procédé selon la revendication 9, **caractérisé en ce que** l'alimentation externe (6) est fonctionnellement reliée sans contact par l'intermédiaire d'une antenne d'alimentation (8) et/ou d'une bobine d'induction (10).

12. Procédé selon l'une quelconque des revendications 9 à 11, **caractérisé en ce que** la liaison de communication (4) avec le support d'identification (5) s'effectue à une fréquence de communication f1 (13) et **en ce que** la liaison fonctionnelle sans contact (7) s'effectue à une fréquence d'alimentation f2 (14).

13. Procédé selon la revendication 12, **caractérisé en ce que** la fréquence d'alimentation f2 (14) est sélectionnée comme étant un multiple entier de la fréquence de communication f1 (13).

14. Procédé selon la revendication 12, **caractérisé en ce que** la fréquence de communication f1 (13) est un multiple entier de la fréquence d'alimentation f2 (14).

15. Procédé selon l'une quelconque des revendications 9 à 14, **caractérisé en ce qu'**une charge (22) de l'appareil d'écriture/lecture (1) peut être mise en fonctionnement par l'intermédiaire de l'alimentation externe (6).
